# EUROPÄISCHE PATENTSCHRIFT

(11) **EP 2 052 839 B1**
(45) Veröffentlichungstag und Bekanntmachung des Hinweises auf die Patenterteilung: **16.12.2009**
(21) Anmeldenummer: 07020625.5
(22) Anmeldetag: 22.10.2007
(51) Int. Cl.: B29C 47/88, B29C 47/92

(54) **Vorrichtung mit einem steuerbaren Hauptkühlgasring mit Gleichrichtereinheit und einem Zusatzkühlgasring**
Device with a controllable main cooling gas ring with a rectifier unit and an auxiliary cooling gas ring
Dispositif doté d'un anneau de gaz de refroidissement principal doté d'une unité de redresseur et d'un anneau de gaz de refroidissement supplémentaire

(43) Veröffentlichungstag der Anmeldung: 29.04.2009
(73) Patentinhaber: Kdesign GmbH, 53639 Königswinter (DE)
(72) Erfinder:
(74) Vertreter: Neumann, Ernst Dieter

(56) Entgegenhaltungen:
- EP-A- 1 736 297
- WO-A-2006/039813
- DE-C1- 4 218 997
- US-A- 4 443 400
- SCHROETER B ET AL: "QUERPROFILVERBESSERUNG BEI SCHLAUCHFOLIEN IMPROVEMENT IN THE TRANSVERSE PROFILE OF BLOWN FILMS" KUNSTSTOFFE, CARL HANSER VERLAG, MUNCHEN, DE, Bd. 85, Nr. 3, 1. März 1995 (1995-03-01), Seiten 359-362, XP000488305 ISSN: 0023-5563

## Beschreibung

Die Erfindung betrifft eine Kühlgasvorrichtung, umfassend einen Hauptkühlgasring mit einer Mittelachse A zur Außenkühlung eines innendruckbeaufschlagten Folienschlauches bei der Herstellung von Blasfolien aus thermoplastischem Kunststoff mittels eines Blasfolienextruders, bei der der Folienschlauch aus einem Folienblaskopf austritt und durch die Kühlgasvorrichtung koaxial zur Mittelachse A berührungslos hindurchgeführt wird, mit einem Hauptkühlgasring, der ein Verteilerringgehäuse für Kühlgas umfaßt, an dem insbesondere in Umfangsrichtung gleichsinnig unter einem spitzen Winkel in das Verteilerringgehäuse einlaufende Rohrstutzen angesetzt sind und der zumindest eine nach innen offene Ringdüse aufweist, wobei zwischen dem Verteilerringgehäuse und der zumindest einen Ringdüse eine Strömungsgleichrichteranordnung liegt, die durch eine Vielzahl von radialen Stegwandungen gebildete umfangsverteilte Strömungskanäle umfaßt, deren Durchtrittsquerschnitt durch Verstellmittel veränderbar ist, und einen Zusatzkühlgasring, der dem Hauptkühlgasring in Herstellrichtung des Folienschlauches vorgeschaltet ist und eine Mehrzahl von radial ausgerichteten umfangsverteilten weiteren Strömungskanälen umfaßt, deren Durchtrittsquerschnitt durch Verstellmittel veränderbar ist. Die Rohrstutzen können mit ihren Mittellinien in einer gemeinsamen Ebene liegen und radial außen am Verteilerringgehäuse ansetzen oder seitlich am Verteilerringgehäuse ansetzen und mit ihrem Mittellinien eine Trichterfläche aufspannen.

Bei der Blasfolienherstellung tritt ein Folienschlauch aus erwärmten thermoplastischem Kunststoff aus der Ringdüse eines Folienblaskopfes aus und wird in der Regel vertikal nach oben abgezogen. Die Formstabilität des Folienschlauches wird durch einen Überdruck in seinem Inneren, der über Gaszuführungen im Blaskopf erzeugt wird, aufrechterhalten. Der Schlauchquerschnitt vergrößert sich dabei infolge des Überdrucks in einem Verstreckungsbereich des Folienschlauchs zunächst unter plastischer Verformung, bis durch Kühlung des Folienmaterials die sogenannte Frostgrenze erreicht wird, bei der die plastische Verformung des Folienmaterials zum Stillstand kommt. Der verfestigte Folienschlauch wird dann weiter nach oben abgezogen, doppellagig flachgelegt und auf Wellen aufgewickelt.

Aufgrund von Inhomogenitäten im thermoplastischen Kunststoff ebenso wie auch als Folge von Fließstörungen im Folienblaskopf tritt der Folienschlauch in der Regel mit über dem Umfang ungleichmäßiger Foliendicke aus. Diese Dickenvariation über dem Umfang wird in Herstellrichtung oberhalb der Frostgrenze gemessen, wobei durch die Verwendung von steuerbaren bzw. regelbaren Kühlgasvorrichtungen hinter dem Folienblaskopf auf die Dickenverteilung Einfluß genommen wird. Hierbei wird der Umstand ausgenutzt, daß bei beschleunigter örtlicher Abkühlung des thermoplastischen Kunststoffs das Ausmaß der möglichen Verstreckung reduziert wird, während eine langsame örtliche Abkühlung eine größere Verstreckung und damit eine stärkere Reduzierung der Foliendicke möglich macht. Kühlgasvorrichtungen, die Steuer- oder Regelmöglichkeiten zur Variation der Kühlung über dem Umfang ermöglichen, sind aus dem Stand der Technik bekannt.

Bei den zur Außenkühlung des Folienschlauches eingesetzten Kühlgasvorrichtungen ist es für eine gleichmäßige Kühlung von höchster Wichtigkeit, daß die bereitgestellte Kühlgasströmung zum einen drallfrei radial auf den Folienschlauch gerichtet ist und daß diese Kühlgasströmung zum anderen frei von zufälligen Strömungsfehlern ist, welche eine über den Umfang ungleichmäßige Folienkühlung zur Folge hätten. Daher wird bei allen modernen Kühlgasvorrichtungen zunächst durch etwa tangential an einem Verteilerringgehäuse angesetzte Rohrstutzen eine Drallströmung erzeugt, welche die Inhomogenitäten eliminiert, die von der durch die Rohrstutzen gebildeten Einspeise herrühren. Der beim Anblasen des Folienschlauches mit Kühlgas verfahrenstechnisch unerwünschte Drall muß durch eine dem Verteilerringgehäuse nachgeschaltete Strömungsgleichrichteranordnung abgebaut werden, damit eine saubere radiale Strömung am Austritt aus der Ringdüse entsteht. Um den gewünschten Effekt zu erzielen, muß eine solche Strömungsgleichrichteranordnung eine Vielzahl schmaler radial gerichteter Strömungskanäle oder Bohrungen aufweisen, deren Länge ein Vielfaches der Breite bzw. des Durchmessers beträgt

Aus der DE 42 18 995 A1 ist ein Kühlgasring der genannten Art bekannt, bei dem radial verlaufende Strömungskanäle im Anschluß an einen Strömungsgleichrichter mit steuerbaren Ventileinrichtungen bestückt sind, die in Form von zylindrischen Kolten innerhalb entsprechender Führungen in den einzelnen Strömungskanälen geführt sind. Im übrigen weist der dargestellte Kühlgasring zwei übereinanderliegende Ringdüsen auf, von denen nur die in Produktionsrichtung erste Strömungskanäle hat, die mit den genannten Ventileinrichtungen versehen sind, während die in Produktionsrichtung zweite den Hauptkühlluftstrom führende Ringdüse in den zugeordneten Strömungskanälen keine derartigen Ventileinrichtungen aufweist. Hierbei sind in nachteiliger Weise aufwendige Segmentkanäle nach dem Strömungsgleichrichter erforderlich.

Aus der EP 1 377 796 A2 ist eine Vorrichtung der genannten Art bekannt, bei welcher die einzelnen Strömungskanäle in einer Strömungsgleichrichtereinheit von Schrauben steuerbar verschließbar sind, wobei für jeden einzelnen Strömungskanal eine Schraube erforderlich wird. Aufgrund der engen Lage der Schrauben zueinander, ist der Einbau einzelner Aktuatoren für jede der Schrauben praktisch nicht möglich.

In der EP 0 682 596 B1 wird vorgeschlagen, bei einer derartigen Vorrichtung nur einen Aktuator vorzusehen, der sich auf einer Kreisbahn bewegt, um die Schrauben jeweils nacheinander einzeln zu verstellen, wodurch die Regelgeschwindigkeit extrem herabgesetzt wird. Hierbei wird eine störanfällige Konstruktion erforderlich, um den Aktuator positionsgenau und reproduzierbar auf die Schrauben einwirken lassen zu können.

Aus der EP 1 736 297 A1 ist eine Kühlgasvorrichtung bekannt mit einem Kühlgasring zur Außenkühlung eines innendruckbeaufschlagten Folienschlauches bei der Herstellung von Blasfolien aus thermoplastischem Kunststoff, der ein Verteilerringgehäuse für Kühlgas umfaßt, an dem außen etwa tangential gleichsinnig in das Verteilerringgehäuse einlaufende Rohrstutzen angesetzt sind und der zumindest eine nach innen offene Ringdüse aufweist, wobei zwischen dem Verteilerringgehäuse und der zumindest einen Ringdüse eine Strömungsgleichrichteranordnung liegt, die durch eine Vielzahl von radialen Stegwandungen gebildete umfangsverteilte Strömungskanäle umfaßt, deren Durchtrittsquerschnitt durch Verstellmittel veränderbar ist, wobei jeweils ein einzelnes Verstellelement auf den Durchtrittsquerschnitt einer Mehrzahl von in Umfangsrichtung zueinander benachbarten Strömungskanälen der Strömungsgleichrichteranordnung synchron querschnittsverändernd einwirkt.

Das zugrundeliegende Prinzip liegt in einer Drosselung einzelner Durchtrittsquerschnittsbereiche. Hierbei können in einer Neutral- oder Ausgangsstellung die Durchtrittsquerschnitte aller Gruppen von Strömungskanälen maximal freigegeben sein und bedarfsweise - bei Dickenabweichungen der Foliendicke über dem Umfang - die Durchtrittsquerschnitte einer Gruppe oder einzelner Gruppen von Strömungskanälen gegebenenfalls unterschiedlich gedrosselt werden. Alternativ können in der Neutral- oder Ausgangsstellung die Durchtrittsquerschnitte aller Gruppen von Strömungskanälen gegenüber dem Maximum gleichmäßig reduziert sein und bedarfsweise - also bei Dickenabweichungen des Folienschlauches über dem Umfang - die Durchtrittsquerschnitte einer Gruppe oder mehrerer Gruppen von Strömungskanälen weiter reduziert und die Durchtrittsquerschnitte der übrigen Gruppen von Durchtrittsquerschnitten erweitert werden. Hierbei wird idealerweise der Gesamtdurchsatz von Kühlgas durch den Kühlgasring konstant gehalten. Durch die gemeinsame Verstellung jeweils mehrerer Strömungskanäle durch ein einziges Stellelement wird nur noch ein Bruchteil von entsprechenden Stellelementen erforderlich, so daß der mechanische ebenso wie der steuerungstechnische Aufbau der Steuerung und/oder Regelung stark vereinfacht wird. Zur Beeinflussung, d.h. zur Steuerung oder Regelung der Verteilung des Kühlgasdurchsatzes über dem Umfang werden die Strömungskanäle der Strömungsgleichrichteranordnung genutzt.

Aus der DE 100 29 175 A1 ist eine Kühlgasvorrichtung zur Regelung des Dickenprofils bei der Blasfolienherstellung bekannt, bei der ein Zusatzkühlring mit einer Mehrzahl von regelbaren Strömungskanälen, die umfangsverteilt angeordnet sind, einem ungeregelten Hauptkühlgasring in Herstellrichtung des Folienschlauches vorgeschaltet ist. Aufgrund der geringen Bauhöhe des Zusatzkühlringes sind hierbei die Verstellmittel für die Strömungskanäle ebenso wie die zugehörigen Aktuatoren vom Folienblaskopf entfernt angeordnet, wobei die Kühlgaszuführung eine Vielzahl von Einzelleitungen erfordert.

Der vorliegenden Erfindung liegt die Aufgabe zugrunde, eine Kühlgasvomchtung bereitzustellen, die den Folienschlauch nahe am Folienblaskopf regelbar beeinflussen kann und über eine vereinfachte Anordnung der Verstellmittel und Aktuatoren verfügt.

Die vorgeschlagene Lösung besteht in einer Kühlgasvorrichtung, umfassend einen Hauptkühlgasring mit einer Mittelachse A zur Außenkühlung eines innendruckbeaufschlagten Folienschlauches bei der Herstellung von Blasfolien aus thermoplastischem Kunststoff, der ein Verteilerringgehäuse für Kühlgas umfaßt, der zumindest eine nach innen offene Ringdüse aufweist, wobei zwischen dem Verteileninggehäuse und der zumindest einen Ringdüse eine Strömungsgleichrichteranordnung liegt, die umfangsverteilte Strömungskanäle umfaßt, deren Durchtrittsquerschnitt durch Verstellmittel veränderbar ist, und einen Zusatzkühlgasring, der dem Hauptkühlgasring in Herstellrichtung des Folienschlauches vorgeschaltet ist und eine Mehrzahl von radiale ausgerichteten umfangsverteilten weiteren Strömungskanälen umfaßt, deren Durchtrittsquerschnitt durch Verstellmittel veränderbar ist (bekannt aus Dokument DE 4218997 C1), wobei jeweils ein einzelner Aktuator über Verstellelemente auf den Durchtrittsquerschnitt zumindest eines Strömungskanals im Hauptkühlgasring und zugleich auf den Durchtrittsquerschnitt zumindest eines weiteren Strömungskanals im Zusatzkühlgasring querschnittsverändernd einwirkt. Hierbei können erste Verstellelemente im Bereich der Strömungskanäle des Hauptkühlgasrings und zweite Verstellelemente im Bereich der weiteren Strömungskanäle des Zusatzkühlgasrings fest miteinander verbunden sein, insbesondere einstückig ausgebildet sein.

Während die Verstellung eines ersten Verstellelementes im Hauptkühlgasring aufgrund der verfahrenstechnischen Gegebenheiten eine tendenziell sehr starke, aber lokal unscharfe, verbreiterte Reaktion im Folienprofil hervorruft, erzeugt die gleichzeitige und gleichsinnige Verstellung eines zweiten Verstellelementes im vorgeschalteten Zusatzkühlgasring einen schwächere, aber lokal sehr scharf abgegrenzte Reaktion im Folienprofil.

Durch die Kombination der beiden Verstellungen lassen sich daher neuartige und verbesserte Regelungseffekte erzielen, als bei einer jeweils auf den Hauptkühlgasring oder den Zusatzkühlgasring beschränkten segmentalen Kühlgasregelung.

Die gemeinsam verstellbaren Verstellelemente können jeweils von einzelnen Aktuatoren beaufschlagbar sein, deren Verstellweg etwa parallel zur Mittelachse A ausgerichtet ist. Hierbei kommen insbesondere elektromotorisch oder elektromagnetisch angetriebene Aktuatoren in Betracht, ohne daß andere Typen von Aktuatoren ausgeschlossen sind. Die Aktuatoren können vorzugsweise außen am Verteilerringgehäuse des Hauptkühlgasrings angeordnet sein und mit einem Stellglied durch Bohrungen des Verteilerringgehäuses hindurchgreifen und jeweils auf miteinander gekoppelte Verstellelemente im Hauptkühlgasring und im Zusatzkühlgasring einwirken. Diese Verstellelemente sind bevorzugt starr über eine Verbindungsstange miteinander gekoppelt Es können jedoch auch Mittel zur relativen Justierung zwischen den ersten und zweiten Verstellelementen vorgesehen sein. Zur Reduzierung der erforderlichen Anzahl der Aktuatoren wird vorgeschlagen, daß jeweils ein einzelnes erstes Verstellelement auf den Durchtrittsquerschnitt einer Mehrzahl von in Umfangsrichtung zueinander benachbarten Strömungskanälen im Hauptkühlgasring gemeinsam querschnittsverändernd einwirkt. Um die Wirkung der Strömungsgleichrichtereinheiten nicht negativ zu beeinflussen, wird vorgeschlagen, daß die ersten Verstellelemente jeweils den Eintrittsquerschnitt zu einer Mehrzahl von Strömungskanälen im Hauptkühlgasring veränderbar abdecken. Hierbei ist insbesondere vorgesehen, daß die ersten Verstellelemente im Bereich der Strömungskanäle des Hauptkühlgasrings als gebogene Flachschieber ausgebildet sind.

Bevorzugte konstruktive Ausgestaltungen gehen dahin, daß die gebogenen Flachschieber an die Krümmung des Verteilerringgehäuses vor der Strömungsgleichrichteranordnung angepaßt sind, daß die gebogenen Flachschieber jeweils aus einer angepaßten Gehäusetasche in einen Übergangsbereich zwischen dem Verteilerringgehäuse und den Strömungskanälen einfahrbar sind, oder daß die gebogenen Flachschieber in einer konzentrisch zur Mittelachse A verlaufenden umlaufenden Gehäusenut geführt sind.

Um eine verstärkte Regelbarkeit des Kühlgasstroms über dem Umfang im Zusatzkühlgasring sicherzustellen, ist vorgesehen, daß die zweiten Verstellelemente im Bereich der weiteren Strömungskanäle im Zusatzkühlgasring als Zylinderschieber ausgebildet sind, die jeweils aus einer angepaßten Gehäusebohrung in den Querschnitt der weiteren Strömungskanäle im Zusatzkühlgasring einfahrbar sind. Hierbei wird insbesondere vorgeschlagen, daß die Zylinderschieber jeweils koaxial zu seitlichen Kühlgaszuführbohrungen in den weiteren Strömungskanälen angeordnet sind, auf die sie querschnittsverändernd einwirken. Weiterhin können die Zylinderschieber jeweils Verschließkonen aufweisen, die mit den Kühlgaszuführbohrungen querschnittsverändernd zusammenwirken.

Konstruktiv besteht das Verteilerringgehäuse vorzugsweise aus einer im wesentlichen ebenen Ringplatte und einem nach unten offenen Ringtrogkörper, die miteinander verschraubt sind, um einen Kühlgasringraum zu bilden. Am Verteilerringgehäuse, insbesondere am Ringtrog sind vorzugsweise in Umfangsrichtung gleichsinnig etwa tangential einlaufende Rohrstutzen angeordnet. Die Strömungs-Gleichrichteranordnung wird bevorzugt aus einem in das Verteilerringgehäuse, insbesondere in die Ringplatte, einsetzbaren Trägerring mit einstückig ausgebildeten Stegwandungen bestehen. Sie kann aber auch integraler Teil der Ringplatte oder des Ringtrogkörpers sein.

Der Hauptkühlgasring kann mit einer oder mehreren Ringdüsen bestückt sein, die an einen Ringträger auswechselbar angeschraubt sind und sich an einen Austrittsringspalt hinter der Strömungs-Gleichrichteranordnung anschließen und von diesem gespeist werden. Die Ringdüsen, die, wie bereits erwähnt, beide von der erfindungsgemäßen Steuerung beeinflußt werden, können sich hierbei aus mehreren Ringteilen, die jeweils koaxial zur Mittelachse aufeinandergesetzt werden, ausgebildet sein. Bezüglich des Zusatzkühlgasrings wird vorgeschlagen, daß der Zusatzkühlring im wesentlichen aus einer an den Hauptkühlring angesetzten Ringscheibe gebildet wird, in dem auf der Oberseite ausgebildete Radialnuten zusammen mit einer Unterseite des Hauptkühlgasrings, insbesondere der Unterseite der Ringplatte die weiteren Strömungskanäle ausbilden.

Bevorzugte Ausführungsbeispiele der Erfindung sind in den Zeichnungen dargestellt und werden nachstehend beschrieben.
- Figur 1: zeigt eine erfindungsgemäße Kühlgasvorrichtung in Ansicht in Richtung der Mittelachse A mit Teilschnitt;
- Figur 2: zeigt einen radialen Halbschnitt des Kühlgasringes nach Figur 1 in einer ersten Ausführung;
- Figur 3: zeigt einen radialen Halbschnitt des Kühlgasringes nach Figur 1 in einer zweiten Ausführung;
- Figur 4: zeigt einen Horizontalschnitt senkrecht zur Mittelachse A gemäß der Schnittlinie A-A in den Figuren 2 und 3;
- Figur 5: zeigt einen Horizontalschnitt senkrecht zur Mittelachse A gemäß der Schnittlinie B-B in den Figuren 2 und 3;
- Figur 6: zeigt einen radialen Halbschnitt des Kühlgasringes nach Figur 1 in einer dritten Ausführung;
- Figur 7: zeigt einen Horizontalschnitt senkrecht zur Mittelachse A gemäß der Schnittlinie C-C in Figur 6;
- Figur 8: zeigt einen radialen Halbschnitt des Kühlgasringes nach Figur 1 in einer vierten Ausführung;
- Figur 9: zeigt einen Horizontalschnitt senkrecht zur Mittelachse A gemäß der Schnittlinie D-D in Figur 8;
- Figur 10: zeigt eine erste Folienblasanlage mit einem erfindungsgemäßen Kühlgasring in der Ausführung nach Figur im Vertikalschnitt;
- Figur 11: zeigt eine zweite Folienblasanlage mit einem erfindungsgemäßen Kühlgasring in der Ausführung nach Figur 2 im Vertikalschnitt.
- Figur 12: zeigt eine dritte Folienblasanlage mit einem erfindungsgemäßen Kühlgasring in der Ausführung nach Figur 8 im Vertikalschnitt.

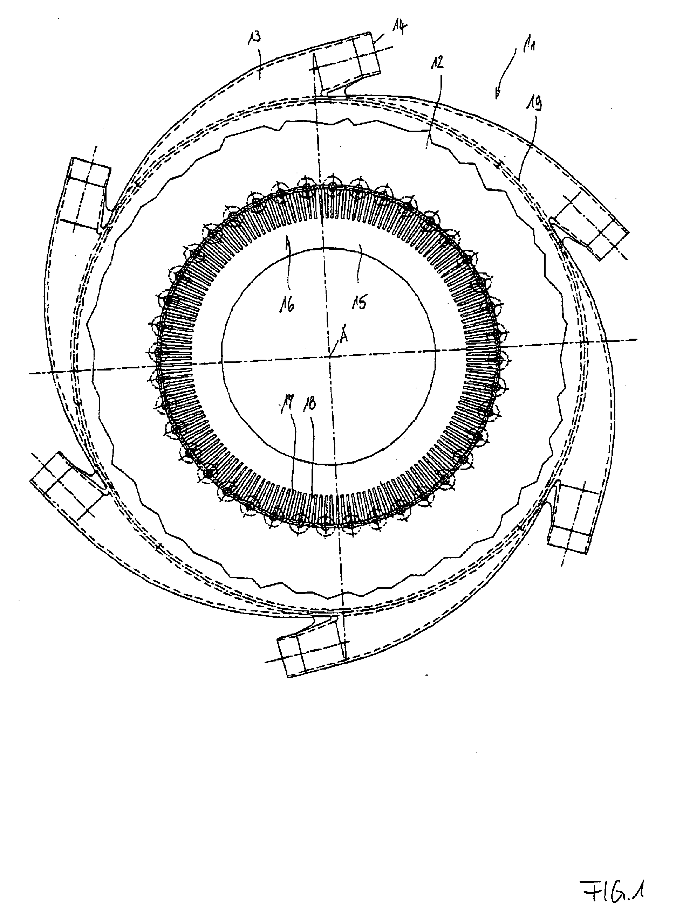

In Figur 1 ist eine erfindungsgemäße Kühlgasvorrichtung in Draufsicht gezeigt, deren Mittelachse A senkrecht auf der Zeichenebene steht. In der Darstellung ist in einem Teilschnitt ein Hauptkühlgasring 11 erkennbar, unter dem ein hier nicht dargestellter Zusatzkühlgasring montiert ist. Der Hauptkühlgasring 11 umfaßt ein Verteilerringgenäuse 12 mit sechs Rohrstutzen 13 mit äußeren Anschlußöffnungen 14 zum Anschließen von Schlauchleitungen. Die Rohrstutzen 13 laufen untereinander gleichsinnig gerichtet etwa tangential in das Verteilerringgehäuse 12 ein. Die Rohrstutzen 13 schließen im Bereich von Strömungsübertritten 19 an das Verteilerringgehäuse 12 an. Radial innen hat der Hauptkühlgasring 11 einen Austrittsringspalt 15, an den ringförmige Anbauteile zur Ausbildung von Ringdüsen angesetzt werden können.

Aufgrund des tangential gerichteten Anbaus der Rohrstutzen 13 an das Verteilerringgehäuse 12 weist das Kühlgas im Bereich des Verteilerringgehäuses 12 einen Drall auf, wohingegen das Kühlgas innen aus dem Austrittsringspalt 15 vollkommen radial gerichtet austreten soll. Daher ist zwischen Verteilerringgehäuse 12 und Austrittsringspalt 15 eine Strömungsgleichrichtereinheit 16 angeordnet, die aus einer Vielzahl von radial verlaufenden Stegwandungen 17 gebildet wird, zwischen denen jeweils einzelne Strömungskanäle 18 liegen. Die Stegwandungen 17 sind in Radialausrichtung mit gleichem Umfangsabstand angeordnet, so daß untereinander gleichartige radiale Strömungskanäle 18 gebildet werden. Radial außen ist jeweils die Eintrittsseite der Strömungskanäle 18 und radial innen jeweils die Austrittsseite der Strömungskanäle 18. Auf der Eintrittsseite der Strömungskanäle 18 sind jeweils erste Verstellelemente 29 in Form von bogenförmigen Flachschiebern vorgesehen, die jeweils von einem Aktuator 66 linear betätigbar sind. Jeder der Flachschieber 29 beeinflußt hierbei in gleichartiger Weise den Eintritts- bzw. Durchtrittsquerschnitt von vier nebeneinander liegenden Strömungskanälen 18.

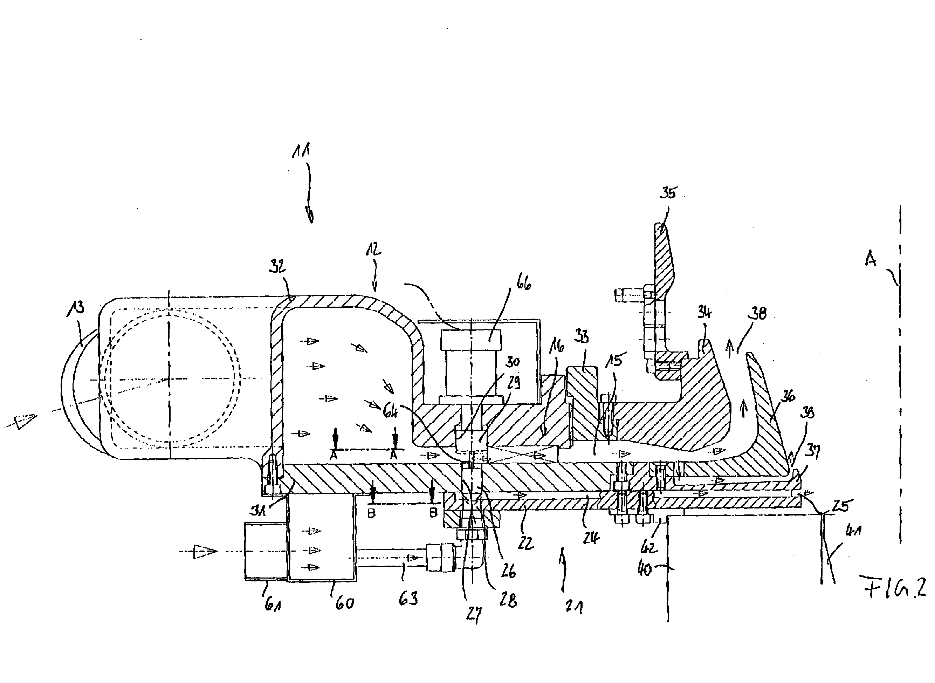

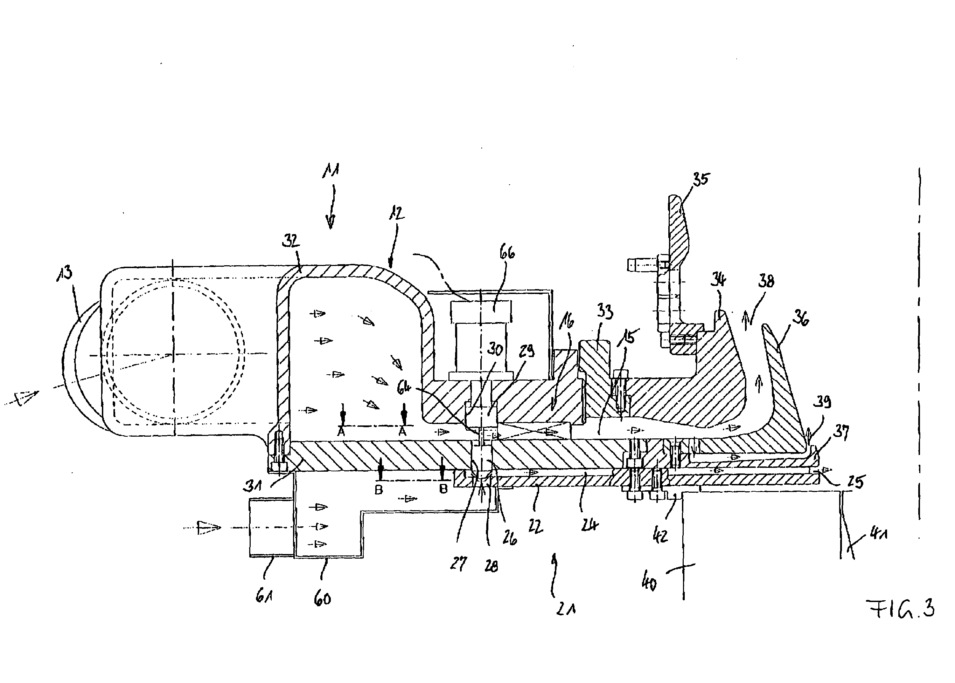

Die Figuren 2 und 3 werden nachfolgend zunächst gemeinsam beschrieben. Auf Unterschiede zwischen den beiden gezeigten Ausführungsformen wird erst abschließend eingegangen. Unter Bezugnahme auf die Mittelachse A ist festzustellen, daß der gezeigte Halbschnitt jeweils zum Ringkörper zu ergänzen ist. Gleiche Einzelheiten sind mit gleichen Ziffern wie in Figur 1 bezeichnet. Unterhalb des Hauptkühlgasringes 11 ist ein Zusatzkühlgasring 21 angeordnet, der mit dem Hauptkühlgasring 11 verbaut ist und über einen Adapterring 42 mit einem Folienblaskopf 40 verbunden ist. Im Folienblaskopf 40 ist eine Ringdüse 41 für Folienmaterial erkennbar.

Der Hauptkühlgasring 11 besteht aus einer Ringplatte 31 und einem Ringtrog 32, die miteinander verschraubt sind, wobei die Rohrstutzen 13 und die Strömungsgleichrichtermittel 16 einstückig am Ringtrog 32 angeformt sind. Der Austrittsringspalt 15 wird von der Ringplatte 31 und einem am Ringtrog 32 angesetzten Düsenhalter 33 sowie weiteren Ringelementen 34, 35, 36, 37 gebildet, die eine in Herstellrichtung des Folienschlauches zuerst austretende kleinere Ringdüse 39 bilden, und eine nachfolgende größere Ringdüse 38, die beide von dem Austrittsringspalt 15 gespeist werden. Der Düsenhalter 33 ist über ein Gewinde gegenüber dem Ringtrog 32 axial verstellbar.

Der Zusatzkühlgasring 21 besteht im wesentlichen aus einer Ringplatte 22, in der einzelne Radialnuten 23 auf der oben liegenden Anschlußseite zum Hauptkühlgasring mit der ebenen Unterseite der Ringspalte 31 weitere Strömungskanäle 24 ausbilden. Während die Kühlgasversorgung der Strömungskanäle 18 im Hauptkühlgasring 11 aus dem Verteilerringgehäuse 12 erfolgt, erfolgt die Kühlgasversorgung der weiteren Strömungskanäle 24 im Zusatzkühlgasring 21 aus einem aus Blech bestehendem Ringgehäuse 60 mit zumindest einem, bevorzugt mehreren umfangsverteilten Anschlußstutzen 61. Der unmittelbare Eintritt in die weiteren Strömungskanäle 24 erfolgt über jeweils eine Eintrittsbohrung 28, die in der Ausführung nach Figur 2 jeweils über eine Verbindungsleitung 63 und in Ausführung nach Figur 3 unmittelbar mit dem Ringgehäuse 60 in Verbindung steht. Während die Strömungskanäle 18 auf der Eintrittsseite von den bereits in Figur 1 erkennbaren Flachschiebern 29 im Durchtrittsquerschnitt beeinflußt werden können, wird der freie Durchtritt der Eintrittsöffnungen 28 zu den zusätzlichen Strömungskanälen 24 durch zweite Verstellelemente 26 in Form von einzelnen Zylinderschiebem 26 verändert. Die ersten und zweiten Verstellelemente 26, 29 sind hierbei jeweils paarweise über eine Verbindungsstange 64 miteinander verbunden und werden gemeinsam von einem Aktuator 66 linear betätig. Während die gebogenen Flachschieber 29 in einer umlaufenden einheitlichen Ringnut 30 im Verteilerringgehäuse geführt werden, sitzen die Zylinderschieber 26 in einzelnen Führungsbohrungen 27 in der Ringplatte 31. Der Aktuator 66 beeinflußt somit zugleich den Durchflußquerschnitt von vier Strömungskanälen 18 im Hauptkühlring 11 und einem zusätzlichen Strömungskanal 24 im Zusatzkühing 21.

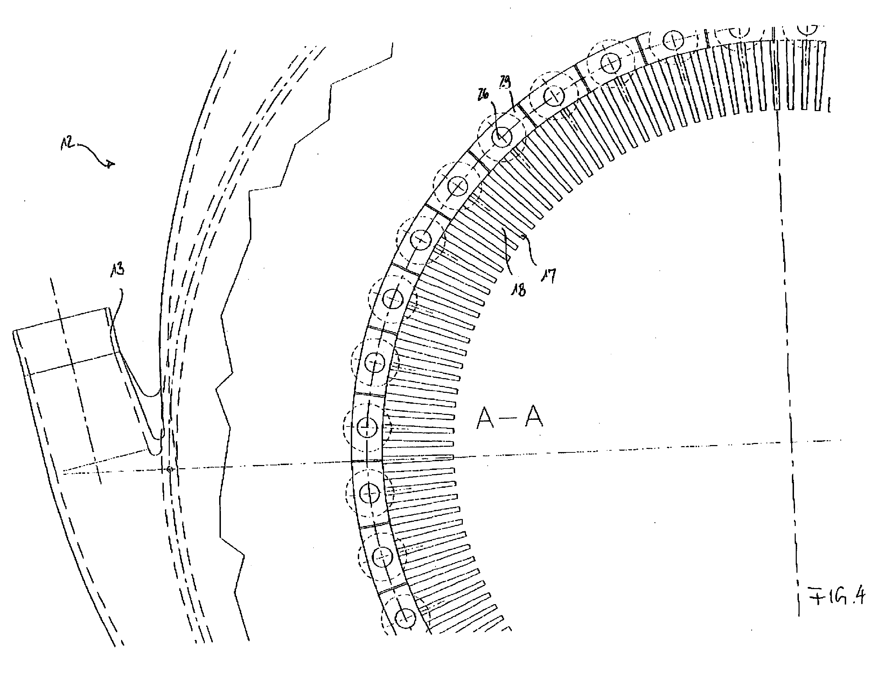

In Figur 4 sind Einzelheiten in einem Schnitt gemäß der Schnittlinie A-A nach den Figuren 2 und 3 erkennbar, die im wesentlichen nur als vergrößerte Darstellung der Figur 1 zu verstehen ist. Gleiche Einzelheiten sind mit gleichen Bezugsziffern wie dort bezeichnet. Die Flachschieber 29 sind gegenüber der Darstellung in Figur 1 hier breiter ausgeführt, wobei erkennbar ist, daß die Flachschieber in einer gemeinsamen Ringnut 30 geführt sind.

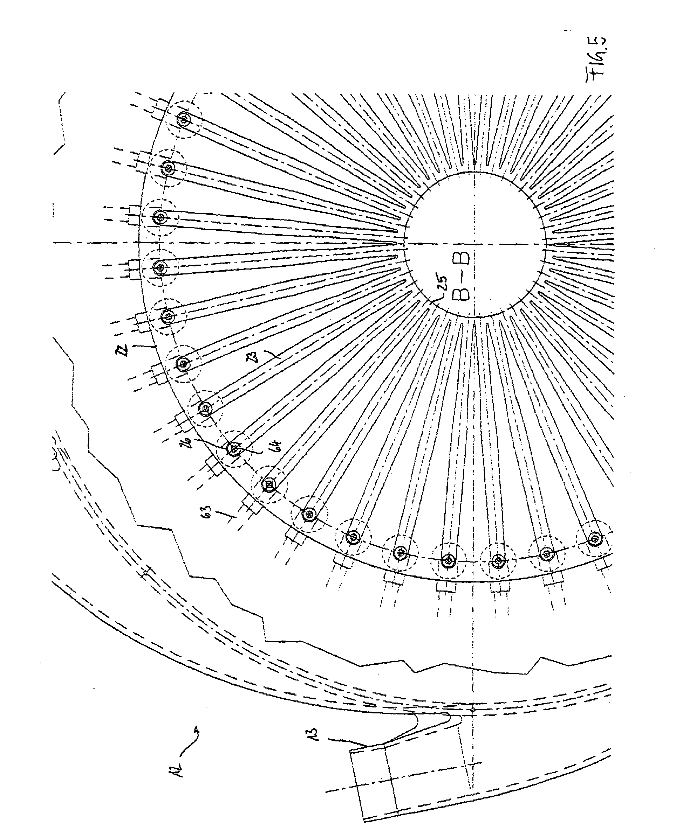

In Figur 5 sind Einzelheiten in einem Schnitt gemäß der Schnittlinie B-B nach den Figuren 2 und 3 erkennbar, die insbesondere die Einzelheiten des Zusatzkühlrings 21 betreffen. Es ist die Ringscheibe 22 mit den Radialnuten 23 erkennbar, die einzelne Strömungkanäle 24 bilden, die innen in eine gemeinsame Ringdüse 25 übergehen. Es sind weiter die einzelnen Anschlußleitungen 63 zu den Eintrittsöffnungen 28 sowie die Zylinderschieber 26 mit den Verbindungsstangen 64 erkennbar.

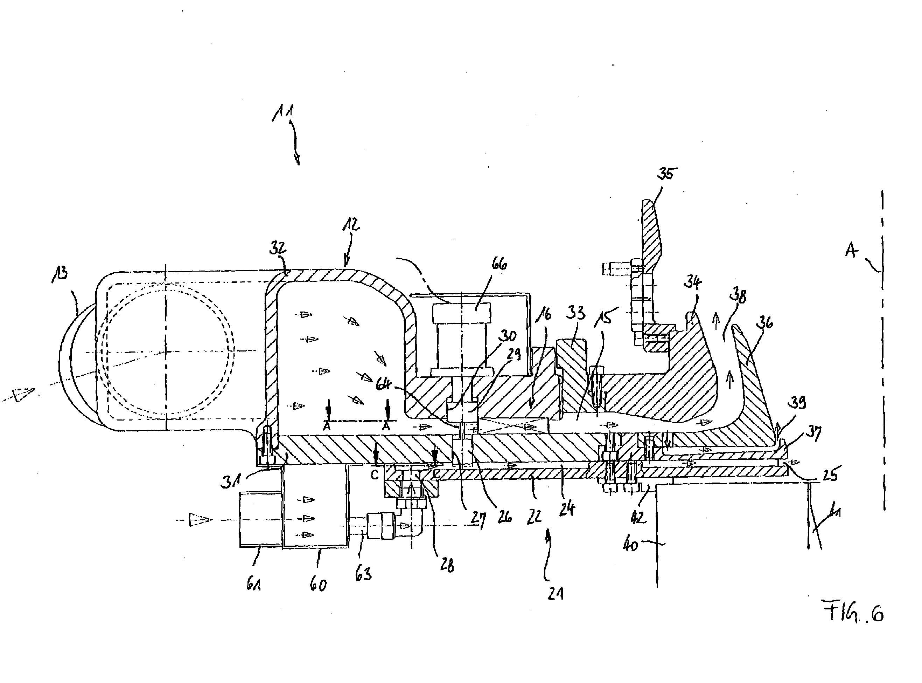

In Figur 6 ist eine erfindungsgemäße Kühlgasvorrichtung im vertikalen Halbschnitt in einer dritten Ausführung dargestellt. Gleiche Einzelheiten wie in den vorangehenden Figuren sind mit gleichen Bezugszeichen belegt, so daß auf die vorhergehende Beschreibung, insbesondere der Figuren 2 und 3, Bezug genommen wird.

Die Eintrittsbohrungen 28 in der Ringscheibe 22 liegen hierbei weiter außen, als die Zylinderschieber 26, die hierbei nur den freien Durchgang der zusätzlichen Strömungskanäle 24 beeinflussen, während die Eintrittsöffnungen 28 jeweils unverändert offen bleiben. Die Kopplung der Zylinderschieber 26 an die Flachschieber 29 erfolgt auch hier jeweils paarweise über Verbindungsstangen 64, so daß ein Aktuator 66 jweils einen Zylinderschieber und einen Flachschieber gemeinsam linear verschiebt.

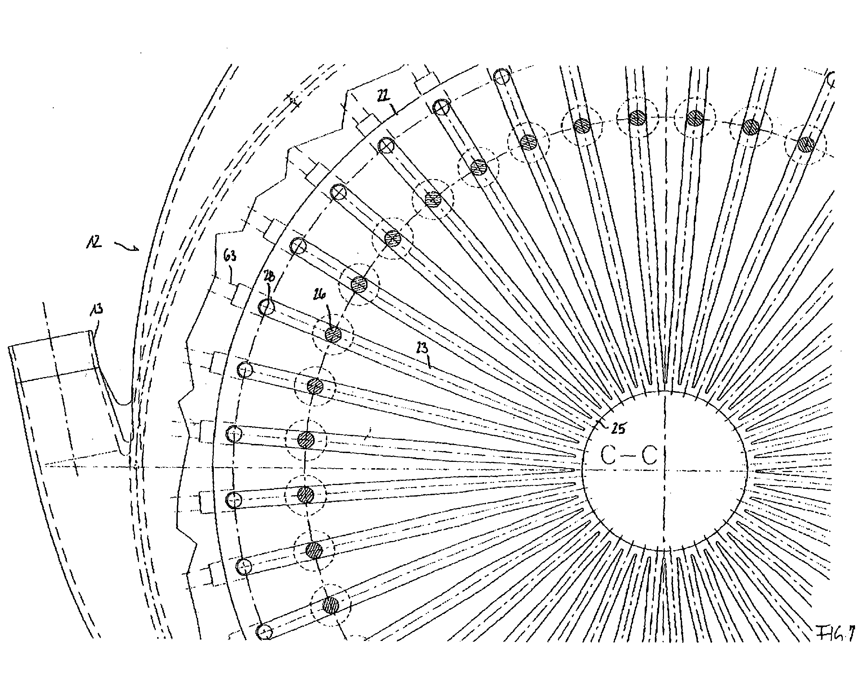

In Figur 7 ist ein Schnitt durch den Zusatzkühlgasring gemäß der Schnittlinie C-C aus Figur 6 dargestellt. Gleiche Einzelheiten sind mit gleichen Bezugsziffern wie in den vorhergehenden Figuren bezeichnet, so daß auf die vorhergehende Beschreibung Bezug genommen wird. Es ist hier der Abstand der Eintrittsbohrungen 28 mit den Anschlußleitungen 63 gegenüber den radial weiter innen im Verlauf der zusätzlichen Strömungskanäle 24 angeordneten Zylinderschiebern 26 erkennbar.

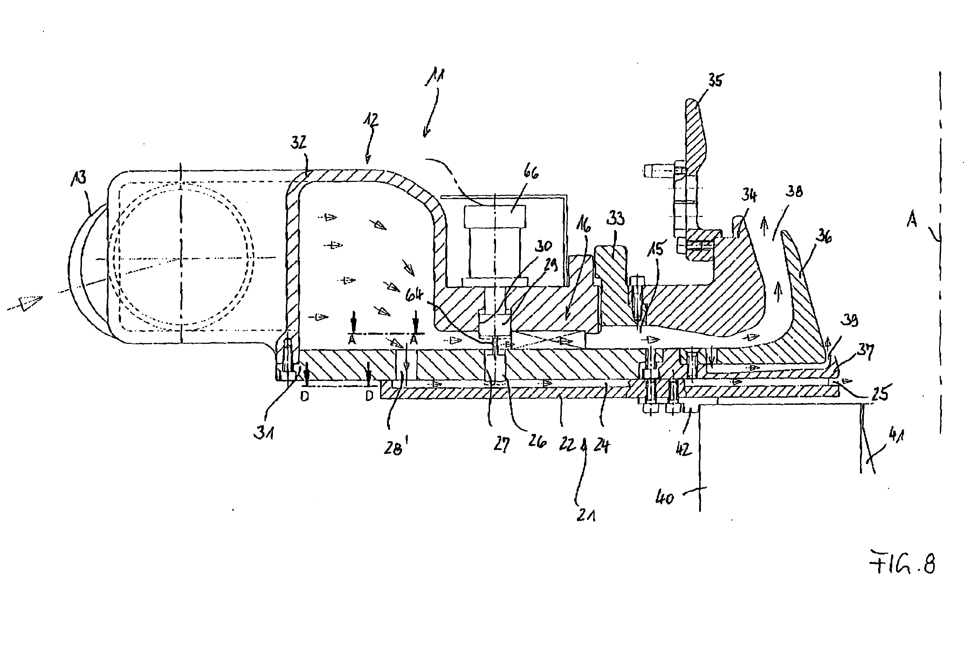

In Figur 8 ist eine erfindungsgemäße Kühlgasvorrichtung in einer vierten Ausführungsform gezeigt. Gleiche Einzelheiten sind mit gleichen Bezugsziffern wie in den vorergehenden Zeichnungen bezeichnet. Auf die vorhergehenden Beschreibungen insbesondere der Figuren 2, 3 und 6 wird insoweit Bezug genommen.

In der hier gezeigten Ausführungsform ist eine Eintrittsöffnung 28' zu den zusätzlichen Strömungskanälen 24 nicht in der Ringscheibe 22 des Zusatzkühlgasringes 21 sondern in der Ringplatte 31 des Hauptkühlgasringes 11 ausgebildet, so daß die Kühlgasversorgung sowohl der Strömungskanäle 18 als auch der zusätzlichen Strömungskanäle 24 einheitlich über das Verteilerringgehäuse 12 erfolgt. Zusätzliche Kühlgasversorgungsleitungen für den Zusatzkühlgasring 21 können auf dieses Weise entfallen. Die Zylinderschieber 26 liegen hierbei wie in der Ausführung nach Figur 5 mit radialem Abstand von den Eintrittsöffnungen 28 im Verlauf der zusätzlichen Strömungskanäle 24.

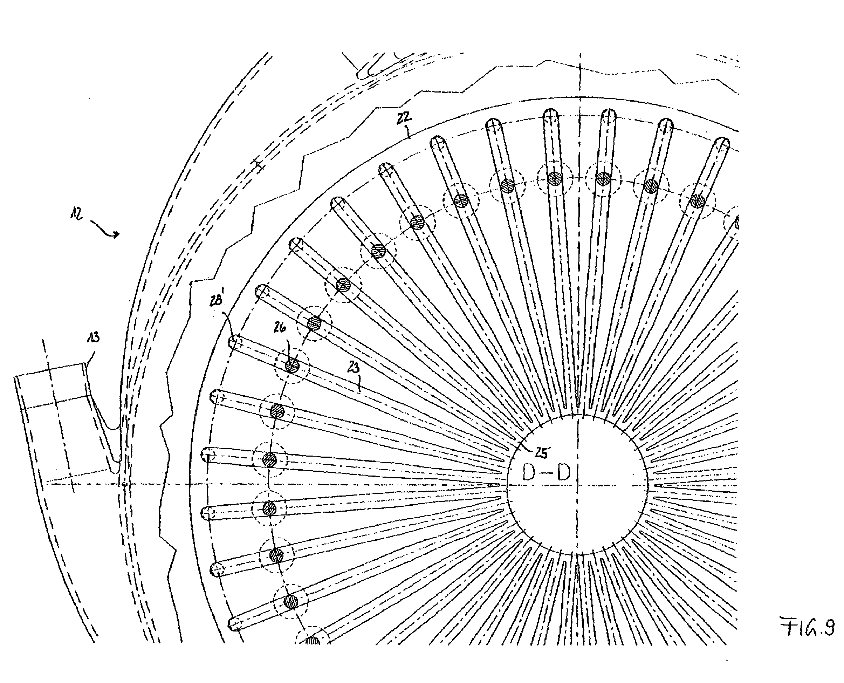

In Figur 9 ist ein Schnitt durch den Zusatzkühlgasring gemäß der Schnittlinie D-D in Figur 8 dargestellt. Gleiche Einzelheiten sind mit gleichen Bezugsziffern wie in den vorangegangenen Figuren bezeichnet. Auf die vorhergehende Beschreibung, insbesondere der Figur 7 wird Bezug genommen. Die oberhalb der Schnittebene liegenden Eintrittsöffnungen 28' sind demgemäß nur gestrichelt gezeigt, abweichend von der Darstellung nach Figur 7.

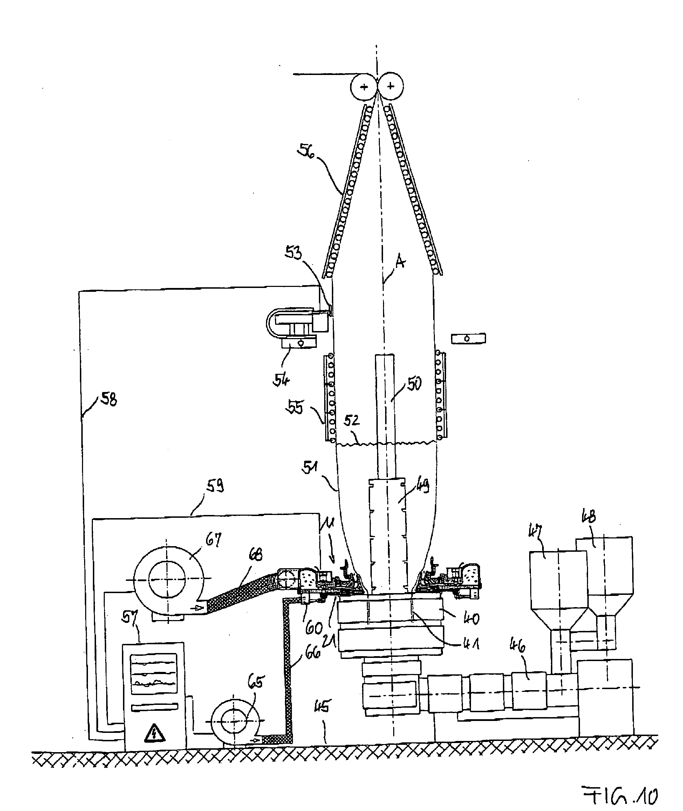

In den Figuren 10 bis 12 ist jeweils eine vollständige Folienblasanlage mit einer erfindungsgemäßen Kühlgasvorrichtung im Vertikalschnitt gezeigt. Auf einem Fundament 45 steht ein Extruder 46 für thermoplastischen Kunststoff, an dem zwei Aufgabetrichter 47, 48 zu erkennen sind. An dem Extruder 46 ist ein Folienblaskopf 40 mit senkrechte Mittelachse A angeordnet, andern eine konzentrisch zur Mittelachse liegende Ringdüse 41 sichtbar ist. Zentral am Folienblaskopf 40 ist eine Gaseinleitanordnung 49 sowie ein Gasabsaugrohr 50 angebracht. Hiermit wird ein innerer Überdruck in dem Folienschlauch 51 erzeugt, der aus der Ringdüse 41 austritt, infolge des Überdrucks sich zunächst erweitert und an einer Frostgrenze 52 in einen Zustand übergeht, in dem eine weitere plastische Verformung des Folienmaterials nicht mehr möglich ist. Die Gaseinleitanordnung 49 kann ebenso wie die Kühlgasvorrichtung 11 zur Kühlung des Schlauchfolienmaterials beitragen. Infolge des inneren Überdrucks, der auch zur Stabilisierung des Folienschlauches 51 dient, kommt es zunächst zu einer Umfangsverstreckung des Schlauchfolienmaterials, die um so schneller unterbunden wird, je stärker das Folienmaterial örtlich abgekühlt wird. Umfangsbereiche der Schlauchfolie, die eine übermäßige Materialdicke haben, werden aus diesem Grund weniger gekühlt, während Umfangsbereiche, die bereits mit einer geringeren Materialdicke austreten, stärker gekühlt werden, um ein zusätzliches Verstrecken und damit ein Ausdünnen des Materials örtlich zu verhindern. Zielsetzung ist eine über dem Umfang gleichmäßige Materialdicke des Schlauchfolienmaterials.

Zur Erfassung des Umfangsverteilung der Schlauchfoliendicke ist eine Sensoranordnung 53 vorgesehen, die auf einem Führungsring 54 periodisch um den Umfang des Folienschlauches 51 herumgeführt werden kann, um die Schlauchfoliendicke zu erfassen. Die Sensoranordnung 53 liegt hinter einem Kallibrierkopf 55, indem die Querschnittsform des Folienschlauches stabilisiert wird, und vor einer Flachlegeanordnung 56, in der der Folienschlauch doppellagig flachgelegt wird, um anschließend in die Horizontale umgelenkt und auf Rollen aufgewickelt zu werden. Eine Regeleinheit 57 ist über eine Meßleitung 58 mir der Sensoranordnung 53 zur Schlauchfoliendikkenmessung verbunden und über eine Mehrzahl von Steuerteitungen 59, von denen nur eine erkennbar ist, mit den über dem Umfang der Kühlgasvorrichtung verteilten Linearaktuatoren 66 zur Verstellung der Verstellelemente, nämlich der Flachschieber 29 und der Zylinderschieber 26 verbunden, mit denen jeweils der Durchtrittsquerschnitt mehrerer Strömungskanäle 18 und eines darunterliegenden zusätzlichen Strömungskanales 25 gemeinsam und gleichsinnig verändert werden kann.

In Figur 10 ist eine Kühlgasvorrichtung gemäß Figur 2 gezeigt, bei der der Hauptkühlgasring 11 Ober Rohrstutzen mit Kühlgas versorgt wird, das diesem über Versorgungsleitungen 68 von einem Hauptkühlgasgebläse 67 zugeführt wird, und bei der der Zusatzkühlring 21 über ein Ringgehäuse 60 mit Kühlgas versorgt wird, das dem Ringgehäuse 60 über eine Versorgungsleitung 62 von einem Kühlgasgebläse 65 zugeführt wird.

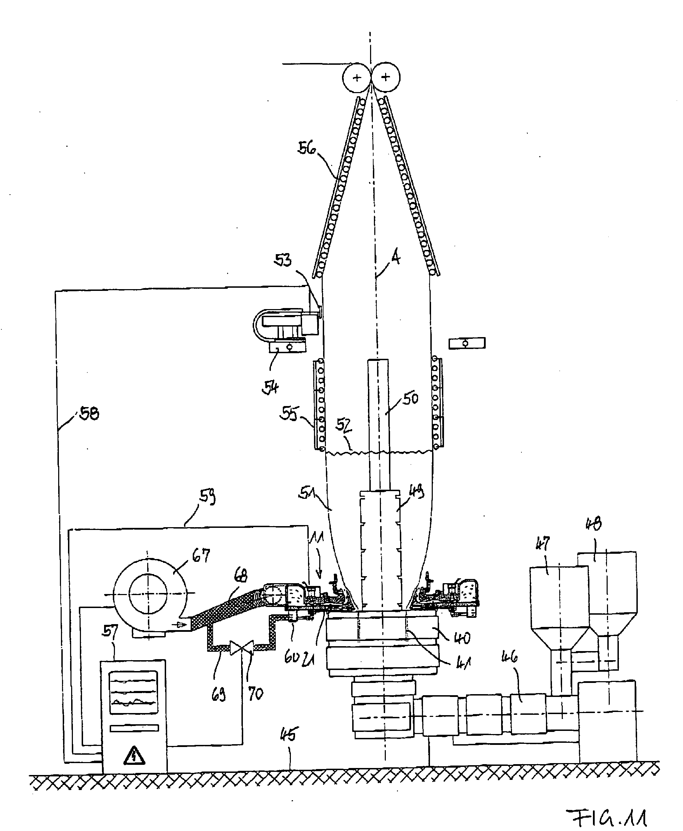

In Figur 11 ist eine Kühlgasvorrichtung gemäß Figur 2 gezeigt, bei der der Hauptkühlgasring 11 über Rohrstutzen mit Kühlgasversorgt wird, das diesem über Versorgungsleitungen 68 von einem Hauptkühlgasgebläse zugeführt wird und bei der der Zusatzkühlring 21 über ein Ringgehäuse 60 mit Kühlgas versorgt wird, das dem Ringgehäuse über eine mittels eines Ventils 70 regelbare Zweigleitung 69 von der Versorgungsleitung 68 mit Kühlgas versorgt wird.

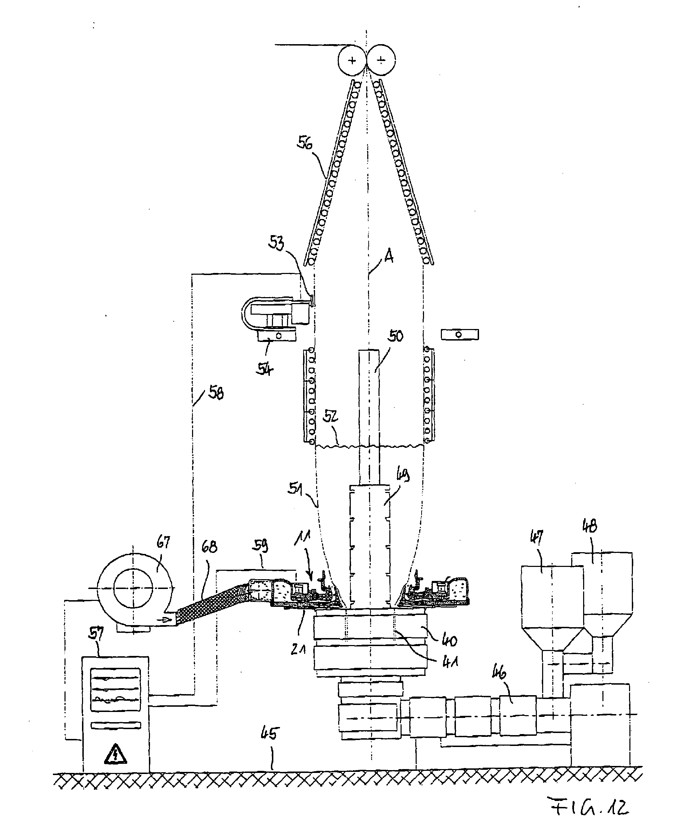

In Figur 12 ist eine Kühlgasvorrichtung gemäß Figur 8 dargestellt, bei der der Hauptkühlgasring 11 über Rohrstutzen mit Kühlgasversorgt wird das diesen über Versorgungsleitungen 68 von einem Hauptkühlgasgebläse 67 zugeführt wird, und bei der der Zusatzkühlgasring 21 unmittelbar vom Hauptkühlgasring 11 über Eintrittsbohrungen 28' mit Kühlgas versorgt wird. Dieses wird dem Hauptkühlgasring über die Rohrstutzen 13 Anschlußleitungen 20 zugeführt.

### Bezugszeichenliste

- 11: Hauptkühlgasring
- 12: Verteilerringgehäuse
- 13: Rohrstutzen
- 14: Eintrittsöffnung
- 15: Austrittsringspalt
- 16: Strömungsgleichrichtereinheit
- 17: Stegwandung
- 18: Strömungskanal
- 19: Strömungsübertritt
- 20: Anschlußleitung
- 21: Zusatzkühlgasring
- 22: Ringscheibe
- 23: Radialnut
- 24: Strömungskanal
- 25: Ringdüse
- 26: Verstellelement (Zylinderschieber)
- 27: Führungsbohrung
- 28: Eintrittsöffnung
- 29: Verstellelement (Flachschieber)
- 30: Ringnut
- 31: Ringplatte
- 32: Ringtrog
- 33: Düsenhalter
- 34: Ringteil
- 35: Ringlippenteil
- 36: Ringteil
- 37: Ringteil

- 33: Ringdüse
- 39: Ringdüse
- 40: Folienlaskopf
- 41: Ringdüse
- 42: Adapterring
- 43:
- 44: Trägerring
- 45: Fundament
- 46: Extruder
- 47: Trichter
- 48: Trichter
- 49: Gaseinleitanordnung
- 50: Gasabsaugrohr
- 51: Folienschlauch
- 52: Frostgrenze
- 53: Dickensensor
- 54: Führungsring
- 55: Kalibrierkorb
- 56: Flachlegevorrichtung
- 57: Regeleinheit
- 58: Meßleitung
- 59: Steuerleitung
- 60: Ringgehäuse
- 61: Anschlußstutzen
- 62:
- 63: Verbindungsleitung
- 64: Verbindungsstange
- 65: Zusatzkühlgebläse
- 66: Versorgungsleitung
- 67: Hauptkühtgasgebläse
- 68: Versorgungsleitung
- 69: Zweigleitung
- 70: Regelventil

## Patentansprüche

1. Kühlgasvorrichtung, umfassend einen Hauptkühlgasring (11) mit einer Mittelachse A zur Außenkühlung eines innendruckbeaufschlagten Folienschlauches (51) bei der Herstellung von Blasfolien aus thermoplastischem Kunststoff, der ein Verteilerringgehäuse (12) für Kühlgas umfaßt, und der zumindest eine nach innen offene Ringdüse (15) aufweist, wobei zwischen dem Verteilerringgehäuse (12) und der zumindest einen Ringdüse (15) eine Strömungsgleichrichteranordnung (16) liegt, die umfangsverteilte Strömungskanäle (18) umfaßt, deren Durchtrittsquerschnitt durch Verstellmittel (29) veränderbar ist, und einen Zusatzkühlgasring (21), der dem Hauptkühlgasring (11) in Herstellrichtung des Folienschlauches (51) vorgeschaltet ist und eine Mehrzahl von radial ausgerichteten umfangsverteilten weiteren Strömungskanälen (24) umfaßt, deren Durchtrittsquerschnitt durch Verstellmittel (26) veränderbar ist,
**dadurch gekennzeichnet,**
**daß** jeweils ein einzelner Aktuator (66) über Verstellelemente (29,26) auf den Durchtrittsquerschnitt zumindest eines Strömungskanals (18) im Hauptkühlgasring (11) und zugleich auf den Durchtrittsquerschnitt zumindest eines weiteren Strömungskanals (24) im Zusatzkühlgasring (21) querschnittsverändernd einwirkt.

2. Vorrichtung nach Anspruch 1,
**dadurch gekennzeichnet,**
**daß** erste Verstellelemente (29) im Bereich der Strömungskanäle (18) des Hauptkühlgasrings (11) und zweite Verstellelemente (26) im Bereich der weiteren Strömungskanäle (24) des Zusatrkühlgasrings (21) fest miteinander verbunden, insbesondere einstückig ausgebildet sind.

3. Vorrichtung nach einem der Ansprüche 1 oder 2,
**dadurch gekennzeichnet,**
**daß** die miteinander verbundenen ersten und zweiten Verstellelemente (26, 29) von Aktuatoren (66) beaufschlagbar sind, deren Verstellweg etwa parallel zur Mittelachse A ausgerichtet ist.

4. Vorrichtung nach einem der Ansprüche 2 bis 3,
**dadurch gekennzeichnet,**
**daß** jeweils ein einzelnes erstes Verstellelement (29) auf den Durchtrittsquerschnitt einer Mehrzahl von in Umfangsrichtung zueinander benachbarten Strömungskanälen (18) gemeinsam querschnittsverändernd einwirkt.

5. Vorrichtung nach Anspruch 4,
**dadurch gekennzeichnet,**
**daß** die ersten Verstellelemente (29) jeweils den Eintrittsquerschnitt zu einer Mehrzahl von Strömungskanälen (18) veränderbar abdecken.

6. Vorrichtung nach einem der Ansprüche 2 bis 5,
**dadurch gekennzeichnet,**
**daß** die ersten Verstellelemente (29) im Bereich der Strömungskanäle (18) des Hauptkühlrings (11) als gebogene Flachschieber ausgebildet sind.

7. Vorrichtung nach einem der Ansprüche 4 bis 6,
**dadurch gekennzeichnet,**
**daß** die gebogenen Flachschieber (29) jeweils aus einer angepaßten Gehäusetasche in einen Übergangsbereich zwischen dem Verteilerringgehäuse (12) und den Strömungskanälen (18) einfahrbar sind.

8. Vorrichtung nach einem der Ansprüche 2 bis 7,
**dadurch gekennzeichnet,**
**daß** die zweiten Verstellelemente (26) im Bereich der weiteren Strömungskanäle (24) im Zusatzkühlgasring (21) als Zylinderschieber ausgebildet sind.

9. Vorrichtung nach einem der Ansprüche 2 bis 8,
**dadurch gekennzeichnet,**
**daß** die zweiten Verstellelemente (26) jeweils aus einer angepaßten Gehäusebohrung (27) in den Querschnitt der weiteren Strömungskanäle (24) einfahrbar sind.

10. Vorrichtung nach Anspruch 9,
**dadurch gekennzeichnet,**
**daß** die zweiten Verstellelemente (26) jeweils koaxial zu seitlichen Kühlgaszuführbohrungen (28) in den weiteren Strömungskanälen (24) angeordnet sind, auf die sie querschnittsverändernd einwirken.

11. Vorrichtung nach Anspruch 10,
**dadurch gekennzeichnet,**
**daß** die zweiten Verstellelemente (26) jeweils Verschließkonen aufweisen, die mit den Kühlgaszuführbohrungen (28) querschnittsverändernd zusammenwirken.

12. Vorrichtung nach einem der Ansprüche 1 bis 11,
**dadurch gekennzeichnet,**
**daß** das Verteilerringgehäuse (12) des Hauptkühlgasrings (11) im wesentlichen aus einer Ringplatte (31) und einem Ringtrog (32) zusammengesetzt ist.

13. Vorrichtung nach einem der Ansprüche 1 bis 12,
**dadurch gekennzeichnet,**
**daß** am Verteilerringgehäuse (12) des Hauptkühlrings außen in Umfangsrichtung gleichsinnig einlaufende Rohrstutzen (13) angesetzt sind.

14. Vorrichtung nach einem der Ansprüche 1 bis 13,
**dadurch gekennzeichnet,**
**daß** die Strömungsgleichrichteranordnung (16) einen in das Verteilerringgehäuse (12), insbesondere in die Ringplatte (31), eingesetzten Trägerring umfaßt, an dem die Stegwandungen (17) einstückig angesetzt sind.

15. Vorrichtung nach einem der Ansprüche 1 bis 14,
**dadurch gekennzeichnet,**
**daß** am Hauptkühlgasring (11) zumindest zwei Ringdüsen (38, 39) vorgesehen sind, die an einen Austrittsringspalt (15) hinter der Gleichrichteranordnung (16) anschließen.

16. Vorrichtung nach einem der Ansprüche 1 bis 15,
**dadurch gekennzeichnet,**
**daß** der Zusatzkühlring (21) im wesentlichen aus einer an den Hauptkühlring (11) angesetzten Ringscheibe (22) gebildet wird, in dem auf der Oberseite ausgebildete Radialnuten (23) zusammen mit einer Unterseite des Hauptkühlgasrings (11), insbesondere der Unterseite der Ringplatte (31) die weiteren Strömungskanäle (24) ausbilden.

## Claims

1. A cooling gas device comprising a main cooling gas ring (11) with a central axis A for externally cooling an internally pressure-loaded film tube (51) during the production of blown film consisting of thermoplastic plastics, which main cooling gas ring (11) comprises a distributor ring housing (12) for cooling gas and which is provided with at least one inwardly opening annular nozzle (15), wherein, between the distributor ring housing (12) and the at least one annular nozzle (15) there is positioned a flow rectifier assembly (16) which comprises circumferentially distributed flow channels (18) whose through-flow cross-section is variable by adjusting means (29), as well as a supplementary cooling gas ring (21) which is connected in front of the main cooling gas ring (11) in the production direction of the film tube (51) and comprises a plurality of radially aligned, circumferentially distributed further flow channels (24) whose through-flow cross-section is variable by adjusting means (26),
**characterised in**
**that** each individual activator , via adjusting elements (29, 26), has a cross-section changing influence on the through-flow cross-section of at least one flow channel (18) in the main cooling gas ring (11) and, at the same time, on the through-flow cross-section of at least one further flow channel (24) in the supplementary cooling gas ring (21).

2. A device according to claim 1,
**characterised in**
**that** first adjusting elements (29) in the region of the flow channels (18) of the main cooling gas ring (11) and second adjusting elements (26) in the region of the further flow channels (24) of the supplementary cooling gas ring (21) are firmly connected to one another, more particularly, are produced so as to be integral with one another.

3. A device according to any one of claims 1 or 2,
**characterised in**
**that** the inter-connected first and second adjusting elements (26, 29) can be loaded by actuators (66) the direction of adjustment of which is approximately parallel to the central axis A.

4. A device according to any one of claims 2 to 3,
**characterised in**
**that** each one single first adjusting element (29) has a cross-section changing effect on the through-flow cross-section of a plurality of circumferentially adjoining flow channels (18) jointly.

5. A device according to claim 4,
**characterised in**
**that** the first adjusting elements (29) variably cover the entry-cross-section for a plurality of flow channels (18).

6. A device according to any one of claims 2 to 5,
**characterised in**
**that** the first adjusting elements (29) in the region of the flow channels (18) of the main cooling gas ring (11) are provided in the form of curved flat slides.

7. A device according to any one of claims 4 to 6,
**characterised in**
**that** the curved flat slides (29) can each be moved from an adapted housing pocket into a transition region between the distributor ring housing (12) and the flow channels (18).

8. A device according to any one of claims 2 to 7,
**characterised in**
**that** the second adjusting elements (26) in the region of the further flow channels (24) in the supplementary cooling gas ring (21) are provided in the form of cylindrical slides.

9. A device according to any one of claims 2 to 8,
**characterised in**
**that** the second adjusting elements (26) can each be moved from an adapted housing bore (27) into the cross-section of the further flow channels (24).

10. A device according to claim 9,
**characterised in**
**that** the second adjusting elements are arranged coaxially relative to lateral cooling gas supply bores (28) in the flow channels (24) on which they have a cross-section changing effect.

11. A device according to claim 10,
**characterised in**
**that** the second adjusting elements (26) each comprise closing cones which cooperate with the cooling gas supply bores (26) in a cross-section changing way.

12. A device according to any one of claims 1 to 11,
**characterised in**
**that** the distributor ring housing (12) of the main cooling gas ring (11) is substantially composed of an annular plate (31) and an annular trough (32).

13. A device according to any one of claims 1 to 12,
**characterised in**
**that,** at the distributor ring housing (12) of the main cooling gas ring, there are attached pipe sockets (13) which run in peripheral in identical sense.

14. A device according to any one of claims 1 to 13,
**characterised in**
**that** the flow rectifier assembly (16) comprises a carrier ring which is inserted into the distributor ring housing (12), more particularly into the annular plate (31) and to which the web walls (17) are integrally attached.

15. A device according to any one of claims 1 to 14,
**characterised in**
**that** at the main cooling gas ring (1) there are provided at least two annular nozzles (38, 39) which adjoin an exit ring gap (15) behind the rectifier assembly (16).

16. A device according to any one of claims 1 to 15,
**characterised in**
**that** the supplementary cooling ring (21) is formed substantially of an annular disc (22) attached to the main cooling ring (11) in which radial grooves (23) provided on the upper side together with an underside of the main cooling gas ring (11), more particularly with the underside of the annular plate (31), form the further flow channels (24).

## Revendications

1. Dispositif de gaz de refroidissement comprenant un anneau de gaz de refroidissement principal (11) présentant un axe central A, pour le refroidissement extérieur d'un film tubulaire (51) sollicité en pression par l'intérieur, lors de la fabrication de films de soufflage en une matière synthétique thermoplastique, l'anneau comportant un carter annulaire de distribution (12) pour du gaz de refroidissement, et présentant également au moins une buse annulaire (15) ouverte vers l'intérieur, un groupe (16) de redressement et d'uniformisation directionnelle de l'écoulement étant placé entre le carter annulaire de distribution (12) et ladite au moins une buse annulaire (15) et englobant des canaux d'écoulement (18), qui sont répartis sur la périphérie et dont la section transversale de passage peut être modifiée par des moyens de réglage (29), le dispositif comprenant également un anneau de gaz de refroidissement supplémentaire (21) qui est placé en amont de l'anneau de gaz de refroidissement principal (11) en se référant à la direction de fabrication du film tubulaire (51), et comprend une pluralité d'autres canaux d'écoulement (24) d'orientation radiale, répartis sur la périphérie, et dont la section transversale de passage peut être modifiée par des moyens de réglage (26),
**caractérisé en ce qu'**un actionneur (66) individuel respectif agit, par l'intermédiaire d'éléments de réglage (29, 26), sur la section transversale de passage d'au moins un canal d'écoulement (18) dans l'anneau de gaz de refroidissement principal (11) et simultanément sur la section transversale de passage d'au moins un autre canal d'écoulement (24) dans l'anneau de gaz de refroidissement supplémentaire (21), en en faisant varier la section transversale.

2. Dispositif selon la revendication 1, **caractérisé en ce que** des premiers éléments de réglage (29) dans la zone des canaux d'écoulement (18) de l'anneau de gaz de refroidissement principal (11) et des deuxièmes éléments de réglage (26) dans la zone des autres canaux d'écoulement (24) de l'anneau de gaz de refroidissement supplémentaire (21), sont reliés mutuellement de manière fixe, et notamment réalisés d'un seul tenant.

3. Dispositif selon l'une des revendications 1 ou 2, **caractérisé en ce que** les premiers et les deuxièmes éléments de réglage (26, 29) reliés mutuellement peuvent être manoeuvrés par des actionneurs (66) dont le déplacement de réglage est orienté environ parallèlement à l'axe central A.

4. Dispositif selon l'une des revendications 2 à 3, **caractérisé en ce qu'**un premier élément de réglage (29) individuel respectif agit en commun sur la section transversale de passage de plusieurs canaux d'écoulement (18) mutuellement voisins dans la direction périphérique, en en faisant varier la section transversale.

5. Dispositif selon la revendication 4, **caractérisé en ce que** les premiers éléments de réglage (29) couvrent respectivement, de manière variable, la section transversale d'entrée vers plusieurs canaux d'écoulement (18).

6. Dispositif selon l'une des revendications 2 à 5, **caractérisé en ce que** les premiers éléments de réglage (29) sont réalisés sous la forme de coulisseaux plats courbes dans la zone des canaux d'écoulement (18) de l'anneau de gaz de refroidissement principal (11).

7. Dispositif selon l'une des revendications 4 à 6, **caractérisé en ce que** les coulisseaux plats courbes (29) peuvent être introduits, chacun à partir d'une cavité de carter respective adaptée, dans une zone de transition entre le carter annulaire de distribution (12) et les canaux d'écoulement (18).

8. Dispositif selon l'une des revendications 2 à 7, **caractérisé en ce que** les deuxièmes éléments de réglage (26) sont réalisés sous la forme de coulisseaux cylindriques dans la zone des autres canaux d'écoulement (24) dans l'anneau de gaz de refroidissement supplémentaire (21).

9. Dispositif selon l'une des revendications 2 à 8, **caractérisé en ce que** les deuxièmes éléments de réglage (26) peuvent être introduits, chacun à partir d'un alésage de carter (27) respectif adapté, dans la section transversale des autres canaux d'écoulement (24).

10. Dispositif selon la revendication 9, **caractérisé en ce que** les deuxièmes éléments de réglage (26) sont agencés chacun de manière coaxiale à des alésages d'alimentation en gaz de refroidissement (28), latéraux, dans les autres canaux d'écoulement (24) sur lesquels ils agissent en en faisant varier la section transversale.

11. Dispositif selon la revendication 10, **caractérisé en ce que** les deuxièmes éléments de réglage (26) présentent respectivement des cônes d'obturation, qui interagissent avec les alésages d'alimentation en gaz de refroidissement (28) en en faisant varier la section transversale.

12. Dispositif selon l'une des revendications 1 à 11, **caractérisé en ce que** le carter annulaire de distribution (12) de l'anneau de gaz de refroidissement principal (11) est essentiellement composé d'une plaque annulaire (31) et d'un corps en forme d'auge annulaire (32).

13. Dispositif selon l'une des revendications 1 à 12, **caractérisé en ce que** sur le carter annulaire de distribution (12) de l'anneau de refroidissement principal sont placés, à l'extérieur, des embouts tubulaires (13) qui y pénètrent selon le même sens en direction périphérique.

14. Dispositif selon l'une des revendications 1 à 13, **caractérisé en ce que** le groupe (16) de redressement et d'uniformisation directionnelle de l'écoulement comprend un anneau de support encastré dans le carter annulaire de distribution (12), notamment dans la plaque annulaire (31), et sur lequel sont formées d'un seul tenant avec lui, les parois de nervures (17).

15. Dispositif selon l'une des revendications 1 à 14, **caractérisé en ce que** sur l'anneau de gaz de refroidissement principal (11) sont prévues au moins deux buses annulaires (38, 39), qui se raccordent à un interstice annulaire de sortie (15) à la suite du groupe (16) de redressement et d'uniformisation directionnelle.

16. Dispositif selon l'une des revendications 1 à 15, **caractérisé en ce que** l'anneau de gaz de refroidissement supplémentaire (21) est formé essentiellement par un disque annulaire (22) qui est rapporté sur l'anneau de refroidissement principal (11) et dans lequel des rainures radiales (23) formées sur la face supérieure, réalisent, en commun avec une face inférieure de l'anneau de gaz de refroidissement principal (11), notamment la face inférieure de la plaque annulaire (31), lesdits autres canaux d'écoulement (24).
